# EUROPEAN PATENT APPLICATION

(11) **EP 2 735 498 A1**
(43) Date of publication of application: **28.05.2014**
(21) Application number: 12193848.4
(22) Date of filing: 22.11.2012
(51) Int. Cl.: B62J 9/00, B62J 11/00, F16B 7/14

(54) **A fixing system for attaching a basket to the handlebar of a bicycle**

(71) Applicant: Fisher Outdoor Leisure Limited, St Albans, Hertfordshire AL1 5UG (GB)
(72) Inventor: Handoll, Robert, ST. ALBANS, Hertfordshire AL1 5UG (GB)
(74) Representative: Fluit, Jeroen

(57) **Abstract**

A fixing system for a handlebar of a bicycle comprises: a clamp body (1) for attaching to the handlebar of the bicycle, a back attachment plate (9) for attaching to a bag or a basket to be mounted to the handlebar of the bicycle, and an attachment plate (2) used for combing the clamp body (1) and the back attachment plate (9) with each other. The back attachment plate (9) and the attachment plate (2) can be attached to the clamp body (1) and the bag or the basket attached to the back attachment plate (9) is mounted to the handlebar of the bicycle therefore.

## Description

### Technical Field

The present invention generally relates to a bicycle fixing system. More specifically, the present invention relates to a fixing system for mounting a bag or a basket to the handlebar of the bicycle.

### Background

Many bicycles have a handlebar fixing system for mounting a bag or a basket thereon. An assembly for attaching a bag to a bicycle is shown in GB Publication No. 2437741A1 (Fig.1). In the GB patent application, the handlebar fixing system includes a clamp body 100 with two clamps 200 which can be secured to the handlebar 510, and an attachment 610 which is attached to a bag 600. The clamp body 100 has two elastic buckles (not shown) and the attachment 610 has two notches (not shown) corresponding to the two elastic buckles of the clamp body 100. When the bag 600 is to be mounted to the handlebar 510 by the fixing system, the clamp body 100 is first mounted to the handlebar 510 by means of the clamps 200 and later the clamp body 100 and the attachment 600 are combined with each other by engaging the elastic buckles of the clamp body 100 with the notches of the attachment 600. However, the combination of the clamp body 100 and the attachment 600 is held by the engagement of the elastic buckles and the notches only and thus such engagement is unsafe and unstable. Further, since the elastic buckles engage with the notches by their elasticity only, it is inconvenient for an user to mount the bag to the handlebar or dismount the bag from the handlebar. Besides, the elastic fatigue will happen after a period of time such that the bag may fall from the handlebar easily.

In view of the above, there may exist a need for an improved handlebar fixing system for a bicycle. The present invention addresses this need as well as other needs, which will become apparent to the persons skilled in the art from the disclosure of the present invention.

### Summary

One objective of the present invention is to provide a fixing system for a handlebar of a bicycle, which can mount a bag or a basket to the handlebar.

Another objective of the present invention is to provide a fixing system for a handlebar of a bicycle which can safely and stably mount the bag or the basket to the handlebar.

A further objective of the present invention is to provide a fixing system for a handlebar of a bicycle which enables the bag or the basket be mounted to the handlebar and/or dismounted from the handlebar.

A further objective of the present invention is to provide a durable fixing system for a handlebar of a bicycle.

A further objective of the present invention is to provide a fixing system for a handlebar of a bicycle which can be assembled onto the bicycle and disassembled from the bicycle.

Accordingly there is provided a fixing system for a handlebar of a bicycle, comprising a clamp body comprising: a button, a first end; a second end (substantially) opposite to the first end; a spring loaded engagement tooth arranged at the first end of the clamp body, wherein the engagement tooth is driven by the button; two flanges formed at the first end of the clamp body and separately arranged at two sides of the engagement tooth; and at least one connector for connecting to the handlebar, which is arranged at the second end of the clamp body;; and an attachment plate comprising a recess and a sliding slot for receiving the flanges of the clamp body; wherein the flanges of the clamp body can be inserted into the sliding slot of the attachment plate and the engagement tooth of the clamp body can engage with the recess of the attachment plate while the attachment plate is attached to the first end of the clamp body. Further, the fixing system for a handlebar of a bicycle may further comprise a back attachment plate which can be fixed to the attachment plate at a face opposite to the recess and thus the attachment plate and the back attachment plate can be combined with each other.

The fixing system may comprise at least one retainer arranged underneath the clamp body (1), which can prevent the fixing system (10) from rotating forwardly. The retainer may be a retainer bar (6) constructed and arranged for a bicycle (e.g. a T-bar bicycle) with a vertical stem. The retainer may be a stem retainer (7) constructed and arranged for a bicycle (e.g. a standard bicycle) with a horizontal stem.

The connector (4) may include an upper curved fixed portion (41) formed at the second end (12) of the clamp body (1), a lower curved movable arm (42) pivoted to the fixed portion (41) at an end (412) of the fixed portion (41) and an end (422) of the movable arm (42), a quick release lever (43) with a head (44) abutting against the other end (413) of the fixed portion (41) and a first pin (45) passing through the head (44) so that the quick release lever (43) can pivotally rotate around the first pin (45), and wherein the other end (413) of the fixed portion (41) is fork-shaped and has a slot (415), whereby by passing a screw (50) through the first pin (45), the slot (415) at the other end (413) of the fixed portion (41) and a second pin (52) which passes through the other end (423) of the movable arm (42), they can be secured together. The other end (413) of the fixed portion (41) further has a pair of through holes (411) thereon, and the connector (4) further comprises a locking pin (49) which can be inserted into the through holes (411) of the fixed portion (41) while the clamp body (1) is attached to the handlebar of a bicycle.

In a further embodiment, a fixing system for a handlebar of a bicycle of the present invention comprises: a clamp body comprising: a button; a first end; a second end (substantially) opposite to the first end; a spring loaded engagement tooth arranged at the first end of the clamp body, wherein the engagement tooth is driven by the button; two flanges formed at the first end of the clamp body and separately arranged at two sides of the engagement tooth; and at least one connector for connecting to the handlebar, which is arranged at the second end of the clamp body; and a median plate comprising a recess, and a larger attachment plate for attaching to a bag or a basket, which has a sliding slot for receiving the median plate, whereby the median plate can be inserted into the sliding slot of the larger attachment plate and thus the larger attachment plate and the median plate can be combined with each other; wherein the flanges of the clamp body can be inserted into sliding slot of the larger attachment plate and the engagement tooth of the clamp body can engage with the recess of the median plate while the combination of the median plate and the larger attachment plate is attached to the first end of the clamp body.

The fixing system may comprise at least one retainer arranged underneath the clamp body (1), which can prevent the fixing system (10) from rotating forwardly. The retainer may be a retainer bar (6) constructed and arranged for a bicycle (e.g. a T-bar bicycle) with a vertical stem. The retainer may be a stem retainer (7) constructed and arranged for a bicycle (e.g. a standard bicycle) with a horizontal stem.

The connector (4) may include an upper curved fixed portion (41) formed at the second end (12) of the clamp body (1), a lower curved movable arm (42) pivoted to the fixed portion (41) at an end (412) of the fixed portion (41) and an end (422) of the movable arm (42), a quick release lever (43) with a head (44) abutting against the other end (413) of the fixed portion (41) and a first pin (45) passing through the head (44) so that the quick release lever (43) can pivotally rotate around the first pin (45), and wherein the other end (413) of the fixed portion (41) is fork-shaped and has a slot (415), whereby by passing a screw (50) through the first pin (45), the slot (415) at the other end (413) of the fixed portion (41) and a second pin (52) which passes through the other end (423) of the movable arm (42), they can be secured together. The other end (413) of the fixed portion (41) may have a pair of through holes (411) thereon, and the connector (4) further comprises a locking pin (49) which can be inserted into the through holes (411) of the fixed portion (41) while the clamp body (1) is attached to the handlebar of a bicycle.

### Brief Description of the Drawings

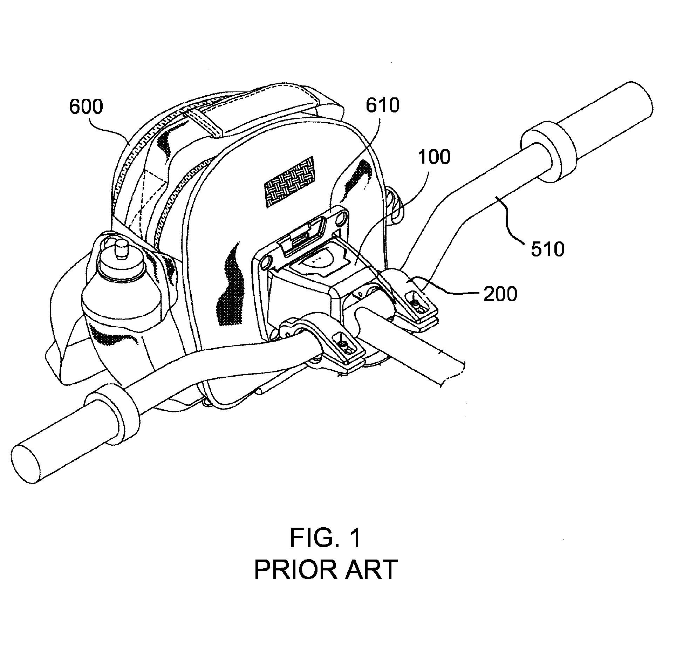

Fig. 1 shows the handlebar fixing system disclosed in GB Publication No. 2437741A1;
Fig. 2A shows a perspective view of the fixing system in accordance with a first embodiment;
Fig. 2B shows an exploded view illustrating a main portion of the clamp body of the fixing system of figure 2A;
Fig. 2C shows a schematic view illustrating the separation of the clamp body from the attachment plate of the fixing system of Fig. 2A;
Fig. 2D shows another schematic view illustrating the assembly of the clamp body and the attachment plate of the fixing system of Fig. 2A;
Fig. 2E shows a cross-sectional view illustrating the fixing system of Fig. 2A;
Fig. 3A shows a schematic view illustrating the disassembly of the clamp body, the larger attachment plate and the median plate in accordance with a second embodiment of the present invention;
Fig. 3B shows another schematic view illustrating the assembly of the clamp body, and the larger attachment plate and the median plate of the fixing system of Fig. 3A; and
Fig. 3C shows a cross-sectional view illustrating the fixing system of Fig. 3A.

### Detailed Description

The preferred embodiment of the present invention is illustrated below with reference to the drawings, and the reference numerals are shown in the figures to indicate the corresponding elements.

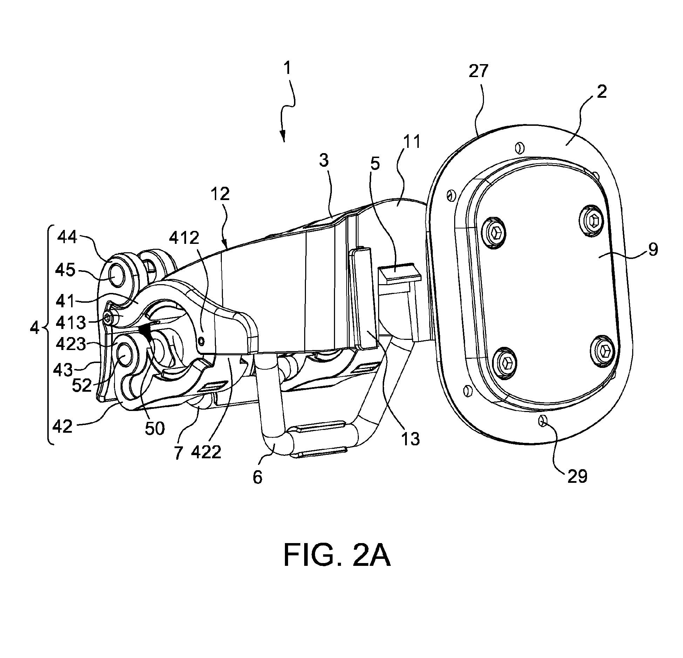

The subject invention is related to a fixing system for mounting a bag or a basket to a handlebar of a bicycle. Figs. 2A-2E show a first embodiment of the fixing system of the invention. The fixing system 10 in accordance with the first embodiment of the present invention comprises a clamp body 1 for attaching to a handlebar of a bicycle, a back attachment plate 9 for attaching to a bag or a basket which is to be mounted to the handlebar of the bicycle, and a attachment plate 2 used for combining the clamp body 1 and the back attachment plate 9 with each other.

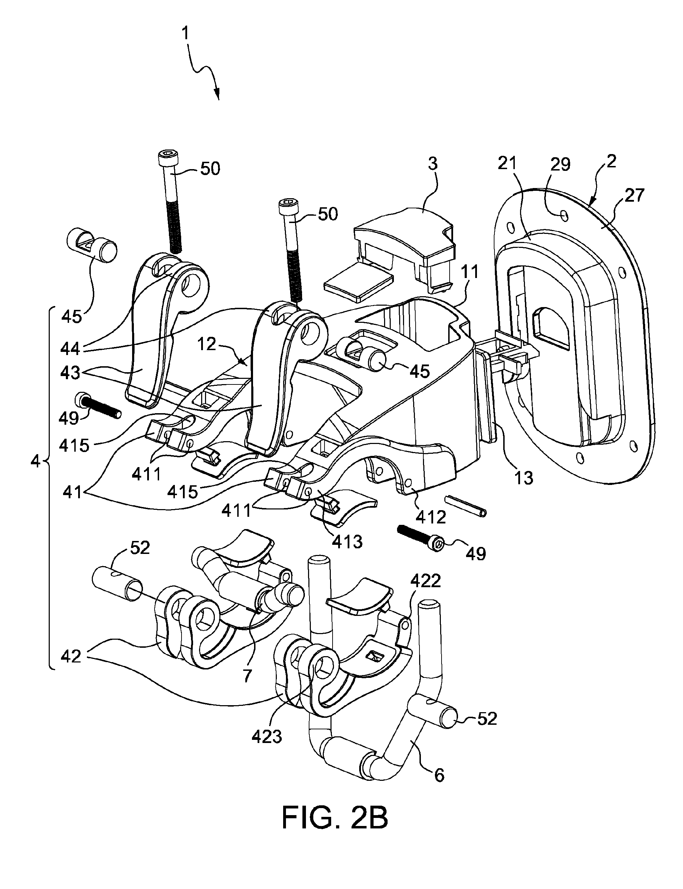

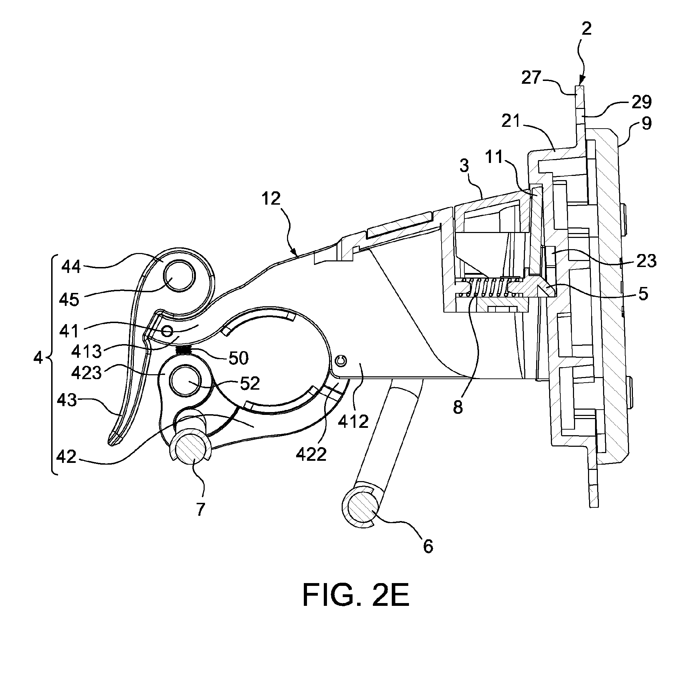

As shown in Figs. 2A and 2B, the clamp body 1 comprises a button 3, a first end 11 and a second end 12 which is opposite to the first end 11, a spring loaded engagement tooth 5, two flanges 13, at least one, preferably two, connector 4, a retainer bar 6 and a stem retainer 7. The button 3 is arranged at the top of the clamp body 1, near the first end 11, and the spring loaded engagement tooth 5 is arranged at the first end 11 of the clamp body 1. The button 3 and the engagement tooth 5 are connected by a spring mechanism 8 inside the clamp body 1 (see Fig. 2E), and thus the engagement tooth 5 is driven by the button 3. Normally, the engagement tooth 5 protrudes from the front end 11 of the clamp body by the spring force of the spring mechanism 8 inside the clamp body 1. When the button 3 is depressed, the spring mechanism 8 will be driven to pull the engagement tooth 5 such that the engagement tooth 5 is drawn back into the clamp body 1. Two flanges 13 are formed at the front end 11 of the clamp body 1 and arranged at two sides of the engagement tooth 5 respectively.

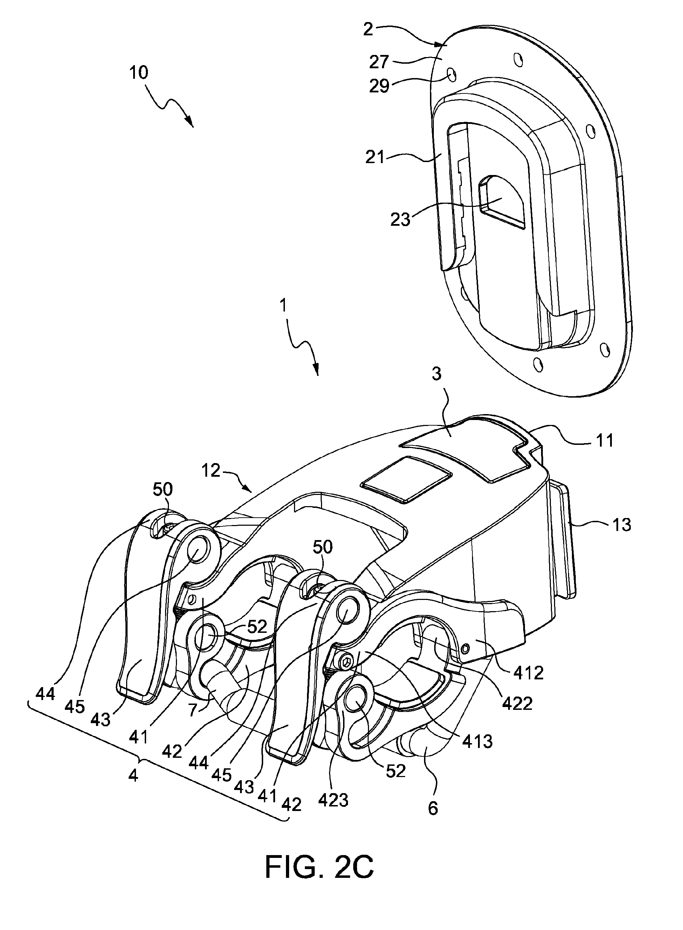

As shown in Figs. 2B and 2C, the connectors 4 are arranged at the second end 12 of the clamp body 1. Each of the connectors 4 includes an upper curved fixed portion 41 formed at the second end 12 of the clamp body 1, a lower curved movable arm 42 pivoted to the fixed portion 41 at an end 412 of the fixed portion 41 and an end 422 of the movable arm 42, near the second end 12, a quick release lever 43 with a head 44 abutting against the other end 413 of the fixed portion 41, and a first pin 45 passing through the head 44 so that the quick release lever 43 can pivotally rotate around the first pin 45. The other end 413 of the fixed portion 41 is fork-shaped and thus has a slot 415.

Further, a screw 50 passes through the first pin 45, the slot 415 at the other end 413 of the fixed portion 41 and a second pin 52 which passes through the other end 423 of the movable arm 42, so as to secure them together. The screw 50 can be adjusted using a tool (e.g., an Allen key) to tighten and loosen the clamp body 1 around the handlebar. Thus, by adjusting the screw 50 and/or the quick release lever 43, the connector 4 can be adjustably fixed to the handlebar of the bicycle such that the clamp body 1 can be adjustably attached to the handlebar of bicycle.

In addition, the other end 413 has a pair of through holes 411 thereon (see Fig. 2A). The connector 4 further has a locking pin 49 which can be inserted into the through holes 411 of the fixed portion 41. Once the clamp body 1 is attached to the bicycle, the locking pin 49 can be inserted into the through holes 411 of the fixed portion 41 so as to secure the clamp body 1 to the handlebar. If the clamp body 1 is to be released from the handlebar, the locking pin 49 should be removed from the through holes 411 of the fixed portion 41 firstly by a tool (e.g., an Allen key).

The retainer bar 6 is arranged underneath and fixed to the clamp body 1 and is designed for a t-bar bicycle with a vertical stem. When the clamp body 1 is attached to a handlebar with a vertical stem, the retainer bar 6 will be in front of the stem so as to prevent the fixing system 10 from rotating forwardly due to the overweight bag or basket. The stem retainer 7 is arranged underneath and fixed to the connectors 4 and is designed for a standard bicycle with a horizontal stem. When the clamp body 1 is attached to a handlebar with a horizontal stem, the stem retainer 7 will be underneath the stem so as to prevent the fixing system 10 from rotating forwardly due to the overweight bag or basket.

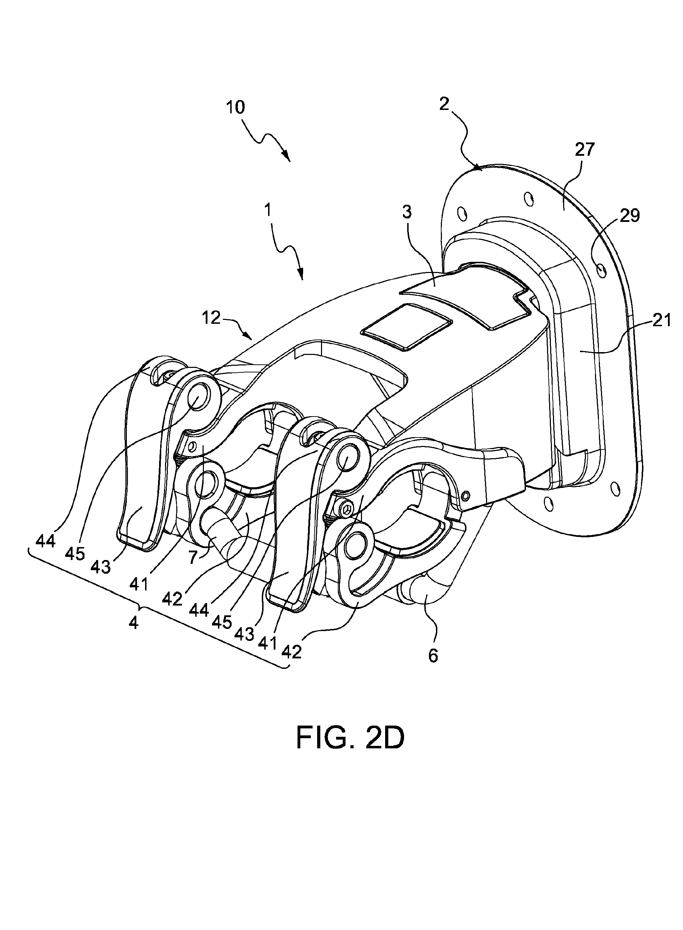

As shown in Fig. 2C, the attachment plate 2 has a sliding slot 21 and a recess 23 formed at a face of the attachment plate 2. Further, as shown in Fig. 2A, the back attachment plate 9 which can be used for attaching to the bag or the basket, can be attached to the other face of the attachment plate 2 by fasteners (e.g., screws) such that the back attachment plate 9 can be fixed to the attachment plate 2. In an embodiment, the back attachment plate 9 is attached to an inside face of the bag/basket so that the bag/basket sits in between the attachment plate 2 and back attachment plate 9. The attachment plate 2, the bag/basket, and the back attachment plate 9 are then fastened together (e.g. using screws). Referring to Figs. 2C and 2D, the flanges 13 formed at the front end 11 of the clamp body 1 are inserted into the sliding slot 21 of the attachment plate 2 and the engagement tooth 5 of the clamp body engages the recess 23 of the attachment plate 2 (see Fig. 2E) to lock the attachment plate 2 such that the attachment plate 2 and the back attachment plate 9 are combined with the clamp body 1. Based on the above, the back attachment plate 9 and the attachment plate 2 can be attached to the first end 11 of the clamp body 1 and the bag or the basket attached to the back attachment plate 9 is mounted to the handlebar of the bicycle therefore. Moreover, when the user would like to dismount the bag or the basket from the handlebar, the user can press the button 3 to draw the engagement tooth 5 back into the clamp body 1 so as to release the attachment plate 2.

Alternatively, the attachment plate 2 can be fixed directly onto a bag without use of the back attachment plate 9. The attachment plate 2 has a flange 27 around the perimeter with holes 29 such that the attachment plate 2 can be attached directly to a rear panel of the bag by inserting fasteners (e.g., rivets) into the holes 29. Thus, the attachment plate 2 can be attached to the bag or the basket directly and the user can mount the bag or basket with the attachment plate 2 only to the handlebar of the bicycle and dismount the bag or basket with the attachment plate 2 only from the handlebar of the bicycle.

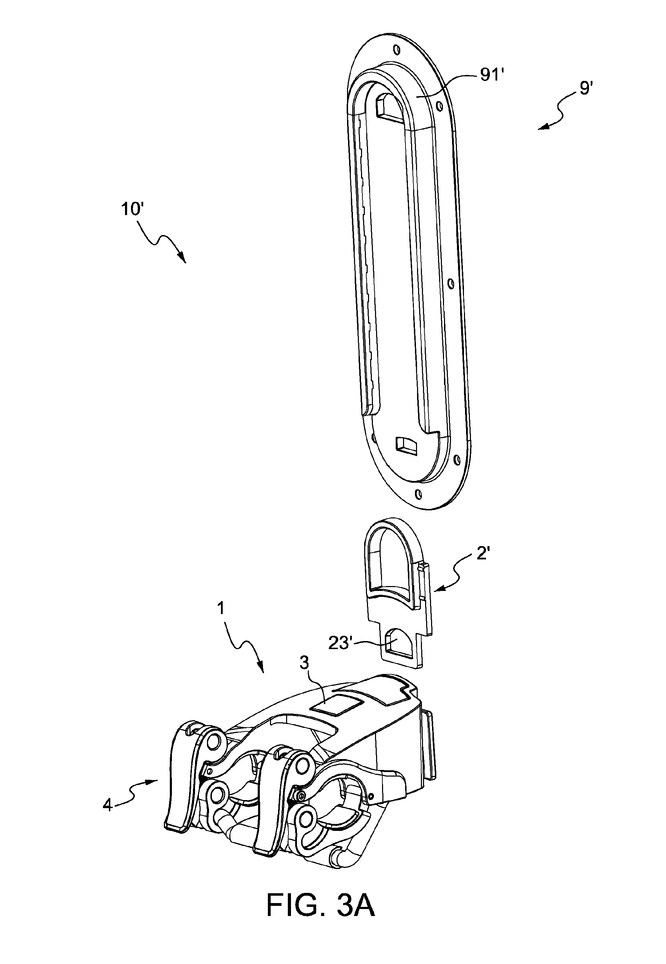

Moreover, Figs. 3A-3C show a second embodiment of the fixing system of the invention. The fixing system 10' comprises a clamp body 1 for attaching to a handlebar of a bicycle, a larger attachment plate 9' for attaching to a bag or a basket which is to be mounted to the handlebar of the bicycle, and a median plate 2' used for combing the clamp body 1 and the larger attachment plate 9' with each other.

The structure of the clamp body 1 of the second embodiment is to the same as that of the first embodiment and thus is not further described.

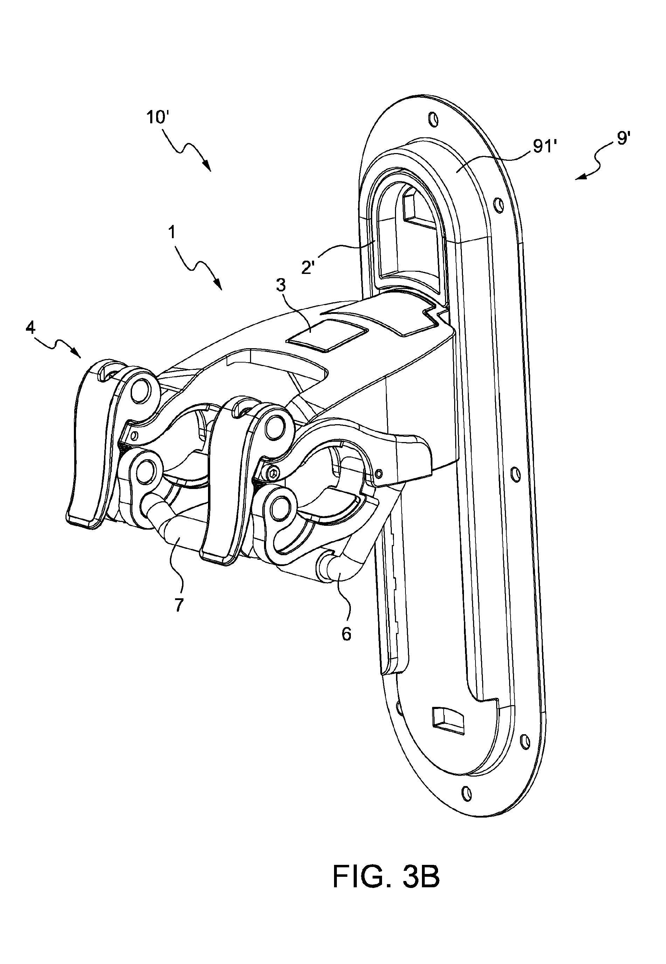

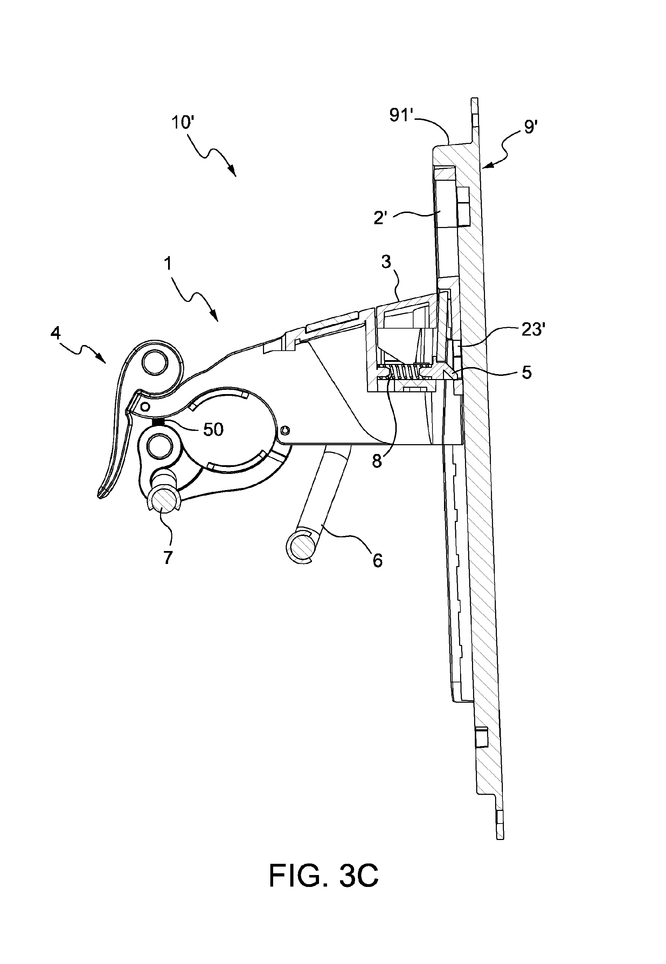

As shown in Figs. 3A and 3B, the median plate 2' has a recess 23' and the larger attachment plate 9' which is used for attaching to the bag or the basket, has a sliding slot 91' for receiving the edge of the median plate 2'. Thus, the median plate 2' can be inserted into the sliding slot 91' of the larger attachment plate 9' such that the median plate 2' and the larger attachment plate 9' can be combined with each other. Referring to Figs. 3A-3C, when the median plate 2' and the larger attachment plate 9' are combined with the clamp body 1, the flanges 13 formed at the front end 11 of the clamp body 1 are inserted into the sliding slot 91' of the larger attachment plate 9' accordingly. Further, the engagement tooth 5 of the clamp body 1 engages the recess 23' of the median plate 2 (see Fig. 3C) so as to lock the median plate 2'. Based on the above, the larger attachment plate 9' and the median plate 2' can be attached to the first end 11 of the clamp body 1 and the bag or the basket attached to the larger attachment plate 9' is mounted to the handlebar of the bicycle therefore. Moreover, when the user would like to dismount the bag or the basket from the handlebar, the user can press the button 3 to draw the engagement tooth 5 back into the clamp body 1 so as to release the median plate 2'.

The present invention should not be considered limited to the particular examples described above, but rather should be understood to cover all aspects of the invention as fairly set out in the attached claims. Various modifications, equivalent processes, as well as numerous structures to which the present invention may be applicable will be readily apparent to those of skill in the art to which the present invention is directed upon review of the present specification. For example, the different combination of the back attachment plate and the attachment plate, and the different connectors for attaching the fixing system to the bicycle, and the modifications of the button and the engagement tooth. The claims are intended to cover such modifications and devices.

## Claims

1. A fixing system (10) for a handlebar of a bicycle, comprising:
a clamp body (1) comprising:
a button (3);
a first end (11);
a second end (12) substantially opposite to the first end (11);
a spring loaded engagement tooth (5) arranged at the first end (11) of the clamp body (1), wherein the engagement tooth (5) is driven by the button (3);
two flanges (13) formed at the first end (11) of the clamp body (1) and separately arranged at two sides of the engagement tooth (5); and
at least one connector (4) for connecting to the handlebar, which is arranged at the second end (12) of the clamp body (1); and
an attachment plate (2) comprising a recess (23) and a sliding slot (21) for receiving the flanges (13) of the clamp body (1); wherein the flanges (13) of the clamp body (1) can be inserted into the sliding slot (21) of the attachment plate (2) and the engagement tooth (5) of the clamp body (1) can engage with the recess (23) of the attachment plate (2) while the attachment plate (2) is attached to the first end (11) of the clamp body (1).

2. The fixing system (1) according to Claim 1, further comprising a back attachment plate (9) fixed to the attachment plate (2) at a face opposite to the recess (23) such that the attachment plate (2) and the back attachment plate (9) can be combined with each other.

3. The fixing system according to any of the preceding Claims comprising at least one retainer arranged underneath the clamp body (1), which can prevent the fixing system (10) from rotating forwardly.

4. The fixing system (1) according to Claim 3, wherein the retainer is a retainer bar (6) constructed and arranged for a bicycle with a vertical stem.

5. The fixing system (1) according to Claim 3, wherein the retainer is a stem retainer (7) constructed and arranged for a bicycle with a horizontal stem.

6. The fixing system (1) according to any of Claims 1 to 5, wherein the connector (4) includes an upper curved fixed portion (41) formed at the second end (12) of the clamp body (1), a lower curved movable arm (42) pivoted to the fixed portion (41) at an end (412) of the fixed portion (41) and an end (422) of the movable arm (42), a quick release lever (43) with a head (44) abutting against the other end (413) of the fixed portion (41) and a first pin (45) passing through the head (44) so that the quick release lever (43) can pivotally rotate around the first pin (45), and wherein the other end (413) of the fixed portion (41) is fork-shaped and has a slot (415), whereby by passing a screw (50) through the first pin (45), the slot (415) at the other end (413) of the fixed portion (41) and a second pin (52) which passes through the other end (423) of the movable arm (42), they can be secured together.

7. The fixing system (1) according to Claim 6, wherein the other end (413) of the fixed portion (41) further has a pair of through holes (411) thereon, and the connector (4) further comprises a locking pin (49) which can be inserted into the through holes (411) of the fixed portion (41) while the clamp body (1) is attached to the handlebar of a bicycle.

8. A fixing system (10) for a handlebar of a bicycle, comprising:
a clamp body (1) comprising:
a button (3);
a first end (11);
a second end (12) substantially opposite to the first end (11);
a spring loaded engagement tooth (5) arranged at the first end (11) of the clamp body (1), wherein the engagement tooth (5) is driven by the button (3);
two flanges (13) formed at the first end (11) of the clamp body (1) and separately arranged at two sides of the engagement tooth (5); and
at least one connector (4) for connecting to the handlebar, which is arranged at the second end (12) of the clamp body (1); and
a median plate (2') having a recess (23'), and
a larger attachment plate (9') for attaching to a bag or a basket, which has a sliding slot (91') for receiving the median plate (2'), whereby the median plate (2') can be inserted into the sliding slot (91') of the larger attachment plate (9') and thus the larger attachment plate (9') and the median plate (2') can be combined with each other;
wherein the flanges (13) of the clamp body (1) can be inserted into sliding slot (9') of the larger attachment plate (9') and the engagement tooth (5) of the clamp body can engage with the recess (23') of the median plate (2') while the combination of the median plate (2') and the larger attachment plate (9') is attached to the first end (11) of the clamp body (1).

9. The fixing system according to Claim 8 comprising at least one retainer arranged underneath the clamp body (1), which can prevent the fixing system (10) from rotating forwardly.

10. The fixing system (1) according to Claim 9, wherein the retainer is a retainer bar (6) constructed and arranged for a bicycle with a vertical stem.

11. The fixing system (1) according to Claim 9, wherein the retainer is a stem retainer (7) constructed and arranged for a bicycle with a horizontal stem.

12. The fixing system (1) according to any of Claims 8 to 11, wherein the connector (4) comprises an upper curved fixed portion (41) formed at the second end (12) of the clamp body (1), a lower curved movable arm (42) pivoted to the fixed portion (41) at an end (412) of the fixed portion (41) and an end (422) of the movable arm (42), a quick release lever (43) with a head (44) abutting against the other end (413) of the fixed portion (41) and a first pin (45) passing through the head (44) so that the quick release lever (43) can pivotally rotate around the first pin (45), and wherein the other end (413) of the fixed portion (41) is fork-shaped and has a slot (415), whereby by passing a screw (50) through the first pin (45), the slot (415) at the other end (413) of the fixed portion (41) and a second pin (52) which passes through the other end (423) of the movable arm (42), they can be secured together.

13. The fixing system (1) according to Claim 12, wherein the other end (413) of the fixed portion (41) further has a pair of through holes (411) thereon, and the connector (4) further comprises a locking pin (49) which can be inserted into the through holes (411) of the fixed portion (41) while the clamp body (1) is attached to the handlebar of a bicycle.
